(19) 

Europäisches
Patentamt
European
Patent Office
Office européen
des brevets

(11)  **EP 1 802 070 B1**

(12)  **EUROPEAN PATENT SPECIFICATION**

(45) Date of publication and mention
of the grant of the patent:
**18.06.2008 Bulletin 2008/25**

(51) Int Cl.:
*H04L 29/06* *(2006.01)*  *H04L 29/12* *(2006.01)*

(21) Application number: **05112647.2**

(22) Date of filing: **21.12.2005**

(54) **Method and apparatus for mobility churn handling for peer-to-peer lookup systems**

Verfahren und Einrichtung zur Behandlung von Mobilitätswechseln für Peer-to-Peer-Suchsysteme

Procédé et dispositif pour le traitement des changements à cause de mobilité pour des systèmes de recherche de peer-to-peer

(84) Designated Contracting States:
**DE GB**

(43) Date of publication of application:
**27.06.2007 Bulletin 2007/26**

(73) Proprietor: **NTT DoCoMo, Inc.**
**Tokyo (JP)**

(72) Inventors:
• **Minokuchi, Atsushi**
**81375 Muenchen (DE)**
• **Kellerer, Wolfgang**
**82256 Fuerstenfeldbruck (DE)**

(74) Representative: **Betten & Resch**
**Patentanwälte**
**Theatinerstrasse 8**
**80333 München (DE)**

(56) References cited:
**WO-A-03/084186**   **US-A1- 2004 064 693**

• **Y.C. HU, S.M. DAS, H. PUCHA: "Peer-to-Peer Overlay Abstractions in MANETs" HANDBOOK ON THEORETICAL AND ALGORITHMIC ASPECTS OF SENSOR, AD HOC WIRELESS, AND PEER-TO-PEER NETWORKS, [Online] August 2005 (2005-08), pages 857-874, XP002384386 CRC PRESS Retrieved from the Internet: URL: http://www.ece.purdue.edu/~ychu/public ations/TAA_p2p.pdf> [retrieved on 2006-06-08]**
• **HUNG-CHANG HSIAO ET AL: "Mobility Churn in DHTs" DISTRIBUTED COMPUTING SYSTEMS WORKSHOPS, 2005. 25TH IEEE INTERNATIONAL CONFERENCE ON COLUMBUS, OH, USA 06-10 JUNE 2005, PISCATAWAY, NJ, USA,IEEE, 6 June 2005 (2005-06-06), pages 799-805, XP010808144 ISBN: 0-7695-2328-5**
• **STOICA I ET AL: "CHORD: A SCALABLE PEER-TO-PEER LOOKUP PROTOCOL FOR INTERNET APPLICATIONS" IEEE / ACM TRANSACTIONS ON NETWORKING, IEEE / ACM, NEW YORK, NY, US, vol. 11, no. 1, February 2003 (2003-02), pages 17-32, XP001144289 ISSN: 1063-6692**

EP 1 802 070 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF INVENTION

The present invention relates to a method and apparatus for mobility churn handling for peer-to-peer lookup systems, in particular for structured peer-to-peer lookup systems.

BACKGROUND OF THE INVENTION

A peer-to-peer lookup system is a distributed system to resolve location of an object from its key. A structured peer-to-peer lookup system is a peer-to-peer lookup system where the overlay topology and data placement are tightly controlled. An existing realization of the structured peer-to-peer lookup system is an system named Chord, a description of which can be found in STOICA, I., MORRIS, R., LIBEN-NOWELL, D., KARGER, D. R., KAASHOEK, M. F., DABEK, F., AND BALAKRISHNAN, H. Chord: A Scalable Peer-to-Peer Lookup Service for Internet Applications. IEEE/ACM TRANSACTIONS NETWORKING, VOL. 11, NO. 1, February 2003.

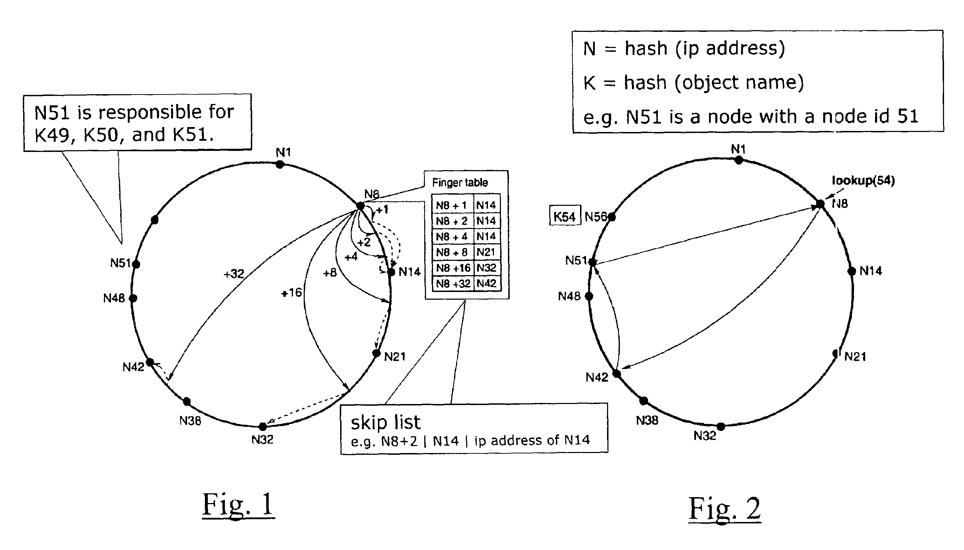

A basic operation of a structured peer-to-peer system such as Chord will now be explained in connection with Fig. 1.

Fig. 1 shows a ring-shaped network of nodes N1 to N51 in which each node has two neighbours, a predecessor and a successor. Chord uses a so-called distributed hash table (DHT) approach for object location. For that purpose each object has assigned an m-bit identifier, called a key, which if formed by a hash-function such as SHA-1 resulting in the m-bit identifier. Moreover, also the IP address of each node in the ring has its corresponding m-bit identifier which is also formed by a hash-function which transforms the IP address into the corresponding m-bit identifier and which thereby forms the node identifier. An object is identified by a (key, value) pair where the key is the identifier of the object and the value is the IP address of the node on which the object is located. By these (key, value) pairs which are systematically distributed over the Chord ring an object is located. Assuming an identifier of length m the identifiers are ordered on an identifier circle modulo $2^m$.

The distribution of the (key, value) pairs is done as follows. Each node is responsible for keys which lie in the range between the identifier of the node and the node identifier of its predecessor. In other words, a node has assigned (key, value) pairs the keys of which are larger than the node identifier of its predecessor and at maximum as large as its own node identifier. This is schematically illustrated in Fig. 1 by showing that the node having the identifier 51 (node N51) is responsible for keys K49, K50 and K51.

If an object is to be located by issuing a search request the node at which the object is stored has to be found. For that purpose the node at which the (key, value) pair corresponding to that object is stored has to be located. This could be done by sending the search request along the nodes of the ring, however, such an approach does not scale well for big structures.

To improve this procedure each node contains additional routing information, a so-called finger table which is a table having up to m entries. The i-th entry at node n in the table contains the identity of the first node s that succeeds n by at least $2^{i-1}$ on the identifier circle, i.e.

$$s = successor\left(n + 2^{i-1}\right) \text{ where } 1 \leq i \leq m \text{ (and all arithmetic is modulo } 2^m \text{)}.$$

Node s is called the i-th finger of node n, and it is denoted *n.finger*[*i*].

The finger table therefore may be regarded as a skip-list which instructs a node how to efficiently forward a search query for a certain key by bypassing its immediate successors and rather forwarding it to a more promising target identified by the finger table. Fig. 1 shows the finger table for node N8 (the node the identifier of which is 8).

The first finger points to node 14, as node 14 is the first node that succeeds

$$\left(8 + 2^0\right) \mod 2^6 = 9.$$

Similarly, the last finger of node 8 points to node 42, as 42 is the first node that succeeds $(8 + 2^5) \mod 2^6 = 40$. A finger table entry includes both the node identifier and its corresponding IP address.

If a key is searched by a search request it is checked if the key is located between the node now handling the request and its successor. If this is not the case the search request is forwarded to up to the node which is the closest preceding node corresponding to the searched key.

Fig. 2 shows what happens if a search for key K54 reaches node N8 or is issued by that node. The key is not located between N8 and its successor N14. Therefore the request is forwarded to node 42, the node the identifier of which is closest to the searched key albeit it is not yet the succeeding node of the searched key. Node N42 then also checks its finger table and detects node N51 as the largest node in its finger table which precedes the searcherd key K54. Node N51 then in turn detects that its own successor N56 succeeds the searched key K54, and thus it returns node 56 to node N8 as the result of the search. Node N8 may then directly contact node N56 to obtain the key K54 stored at Node N56 and its corresponding IP adress indicating the node at which the object corresponding to K54 is actually stored.

Therefore, a search for a key is carried out by looking for the node which is the closest preceding node of the node having an ID equal to or larger than the searched key. This closest preceding node then returns its sucsessor node as the node to which the query may be directed because it stores the searched key.

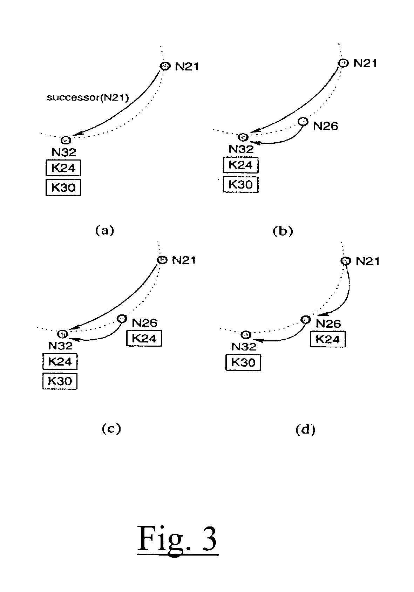

A ring as the one shown in Fig.1 is not necessarily static, but nodes may join the ring and they may leave. This is now schematically illustrated in Fig.3. Fig. 3a) shows the state where the node N21 is succeeded by the node N32. A new node which is assigned the identifier N26 is to join the ring as shown in Fig. 3b). Since its identifier lies between the one of nodes N21 and N32 the node N26 will join the ring at the location between them. Those keys which due to their identifiers should now be located at new node N26, such as key K24, are then transferred to node N26. Once the transfer has been completed (Fig. 3c)) the node N26 notifies node N32 and the key K24 is deleted from node N32.

Similarly, in case of node N26 leaving the ring, if time allows, the keys of a leaving node are transferred to its successor.

A basic feature of the peer-to-peer lookup system is that nodes can join and leave independently. This has more effects on structured systems than on unstructured systems. A rich structure enables scalable and deterministic key lookups, if the system is in its ideal state, but a continuously evolving system almost never comes back to its ideal state. So the churn - continuous processes of node join and leave - is a fundamental problem for the peer-to-peer lookup system, especially for the structured system.

There have been several studies for handling churn in structured systems. A theoretical study can be found in LIBEN-NOWELL, D., BALAKRISHNAN, H., AND KARGER, D. Analysis of the Evolution of Peer-to-Peer Systems, in Proc. ACM PODC 2002, July 2002. Simulation based studies can be found in RHEA, S., GEELS, D., ROSCOE, T., AND KUBIATOWICZ, J. Handling Churn in a DHT. In Proc. USENIX'04, June 2004, and in HSIAO, H. C., AND KING, C. T. Mobility Churn in DHTs. In Proc. IEEE ICDCSW'05, June 2005.

HSIAO et al. points out a trend of changes of main usage scenarios; from an underlying system comprised of wired access nodes to that comprised of wireless access nodes. HSIAO et al. defines mobility churn as churn due to node's move and ordinary churn as churn due to node's join and leave. Then under an assumption that the underlying network does not have any specific mobility management functionalities, HSIAO et al. extensively evaluates the system performance under mobility churn which is dealt with by using ordinary churn handling procedures.

In the following the conventional churn handling procedure for dealing with a join or a leave of a node as done by a system called Chord and described in according to Stoica et al. will be described in somewhat more detail.

At first the procedure for handling a join of a node to the system will be described.

1. Join

When a node joins the system, at first the node's identifier in the system is chosen by hashing the node's IP address with SHA-1 as a base hash function (in the example of Fig. 3 the identifier is 26). Then the node's successor (in Fig. 3a) node N32) is found using the third one of the following three procedures, the third one being supported by the first and the second procedures.

```
// searches the local table for the highest predecessor of id.
    n.closest_preceding_node(id)
            return the largest node u in finger[1...m] or successor_list   // m = the
            identifier length
            so that u∈(n, id) and u is alive;
// asks node n to find the successor of id.
    n.find_successor(id)
            if (id∈(n, successor))
                    return successor;
            else
                    n' = closest_preceding_node(id);
                    return n'.find_successor(id);
//called when node n joins a Chord ring containing node n'.
    n.join(n')
            predecessor = nil;
            successor = n'.find_successor(n);
```

Now the node is attached to the system, not in the cycle but in an appendage (Fig. 3b). At this moment the node is responsible for no keys. Then stabilization procedures are called periodically or when the necessity is recognized. The newly attached node notifies its successor of being its predecessor by running the first one of the following two procedure listed below in pseudocode. Around this point, keys that are supposed to belong to the newly attached node are duplicated in it (Fig. 3c)). The newly attached node's predecessor then realizes that its successor is now the newly attached node by running the second one of the following two procedure listed below in pseudocode. This procedure also notifies the newly attached node of its predecessor (Fig. 3d).

```
// n' thinks it might be the predecessor of the node where this procedure runs.
    n.notify(n')
            if (predecessor is nil or n'∈(predecessor, n))
                    predecessor = n';
// called periodically. verifies n's immediate successor, and tells the successor about n.
    n.stabilize()
            x = successor. predecessor;
            if (x∈(n, successor))
                    successor = x;
            successor.notify(n);
```

Now the node is encompassed in the cycle of the system. In the meantime procedures to construct the finger table and the successor list are called periodically as follows.

```
// called periodically. refreshes finger table entries.
    n.fix_fingers ()
        next = next + 1;
        if (next > m)
            next = 1;
        finger[next] = find_successor(n+2^{next-1})
// called periodically. reconciles with successor's successor list. [2]
    n.fix_successor_list ()
        <s_1, ... , s_r> := successor. successor_list;
        successor_list := <successor, s_1, s_2, ... , s_{r-1}>;
```

At this point keys that have been duplicated in the newly attached node can be removed from its successor.

In the following the procedure in case of a node leaving the system will be described.

2. Leave

For that purpose Chord has a procedure as follows to allow nodes to accept a new predecessor.

```
// called periodically. checks whether predecessor has failed.
    n.check_predecessor ()
        if (predecessor has failed)
            predecessor := nil;
```

```
    n.fix_successor ()
        if (successor has failed)
            successor := smallest live node u in finger[1 ... m] or
successor_list;
```

The Chord system doesn't have any other procedure for a node's (involuntary) leave; procedures described above under 1. and 2. which are called periodically collaborate to maintain the system after node's leave. These procedures may be referred to as "stabilization procedures" because they stabilize the network in case of a leave. However, they do not take into account the fact that a leave may only be temporary.

Now the case of a voluntary departure of a node will be described.

3. Voluntary Node Departure

A measure for voluntary node departures is that the leaving node transfers its keys to its successor before it departs and that the leaving node notifies its predecessor and successor of its departure.

The classical procedures for churn handling as employed e.g. by the Chord system, and as described before however, are not efficient for handling mobility churn.

There are several scenarios, where a node changes its addresses frequently although the node stays connected to the system with intermittent leaves from it. Example scenarios are one where nodes are nomadic, one where DHCP is used to allocate IP addresses e.g. in WLAN hotspots, or one where NAT transforms IP addresses originally allocated to the nodes. During the following description, these scenarios are referred to as mobility scenario and churn caused by the mobility scenario is referred to as mobility churn.

Existing ordinary churn handling procedures, which deal with a node's "join" to and "leave" from the system, work well, as far as real node join, real node failures, and voluntary node departures are concerned. However, problems arise where a node works in a mobility scenario and does not have enough time to prepare for voluntary departure. In existing systems, the behavior of this node is considered as frequent failures and joins, and causes churn. The classical procedure to deal with this mobility churn causes load on the system and is inefficient. It makes structured systems unstable so that they are not efficient any longer and in an extreme case may collapse.

Accordingly, it is an object of the invention to provide an improved method for handling mobility churn.

SUMMARY OF THE INVENTION

According to one embodiment mobility churn is separated from other types of churn dealt with separately and in a different manner than other types of churn. Thereby the system can be stabilized by hiding the mobility churn.

E.g. a node may just have changed its IP address without actually having left or having intended to leave the system. It is therefore advantageous to deal with this case differently than with a normal leave of the system.

The present invention is defined in the independent claims. The dependent claims define embodiments of the invention.

Y.C. Hu, S.M. DAS, H. PUCHA: "Peer-to-Peer Overlay Abstractions in MANETs HANDBOOK ON THEORETICAL AND ALGORITHMIC ASPECTS OF SENSOR, AD HOC WIRELESS, AND PEER-TO-PEER NETWORKS, [Online], August 2005 (2006-08), pages 857-874, XP002384386 discloses a MANET in which node IDs are assigned by hashing static MAC addresses to deal with the fact that the node ID-to-IP mappings of nodes can change over time.

US 2004/0064693 discloses embodiments of a distributed index mechanism for indexing and searching for identity information in peer-to-peer networks. In one embodiment, a distributed index may be used to store identity information in a decentralized manner on a plurality of peer nodes. The identity information may be used, for example, to authenticate users. Distributed indexes may allow identity information to be spread across multiple peer nodes so that the load is spread among the various peer nodes. In one embodiment, the distributed index may be a distributed hash table. One embodiment of a distributed index of identity information may be implemented in peer-to-peer networks implemented according to a peer-to-peer platform including one or more peer-to-peer platform protocols for enabling peer nodes to discover each other, communicate with each other, and cooperate with each other to form peer groups and share network resources.

According to this embodiment there is proposed a method which deals with mobility churn and stabilizes the system by hiding the mobility churn, even under the assumption that the underlying network does not have any mobility management functionalities. This leads to an enhancement to existing structured peer-to-peer lookup systems.

According to one embodiment the method comprises:

in case of a leave of a node from said structured peer-to-peer system due to a change of said IP address of a node, setting a timer for a predetermined time; and
if said node returns within said predetermined time to said peer-to-peer system, returning to its location within said structured peer-to-peer system and notifying members of the peer-to-peer system node about the new address of said node.

This takes into account that mobility churn is usually a temporary phenomenon and that the node which has left due to mobility churn should return within a reasonable time, otherwise it may be assumed that the leave is not temporary but permanent.

According to one embodiment the method comprises:

informing other nodes of said peer-to-peer system to suspend to use finger table entries directed to said node until a notification about a change of the address of said node has been sent.

This avoids a situation where a node trying to forward a query to said node retransmits the query several times, time-out occurs several times, and eventually the node uses a finger table entry which is one-level shorter from that to said node. These time-outs make lookup time longer. In this embodiment, the faulty finger table entry is suspended, so the node can choose an appropriate finger table entry quickly and avoid these time-outs.

According to one embodiment the method comprises:

maintaining an access log table which keeps track of the nodes which have accessed said node;
in case of said node which has left said peer-to-peer system having returned to said system, informing the nodes in said access log table about the new address of said returned node.

The access log table makes it possible to inform the relevant nodes about the new address of the node which has temporarily left.

According to one embodiment said access log table comprises any nodes which have accessed said node which has left and any node which has said node which has left in its finger table.

This takes into account that the access to a node may happen by a query directed to this node by another node or by having included this node in a finger table of another node.

According to one embodiment the method comprises:

duplicating the keys stored in the node to another node which auxiliarily responds to queries directed to said keys.

The key duplication makes it possible to get responses to queries even to such keys for which the node which has left was responsible.

According to one embodiment a response to a query to one of said duplicated keys which is returned by said auxiliary node is marked as being returned by an auxiliary node.

This makes it possible to treat the response as a "temporary one" by the nodes which receive the response. These nodes may therefore prepare that a further identical query may deliver a different result if the node which has left has in the meantime rejoined the system.

According to one embodiment the method comprises:

in case of a node B having node A as predecessor and node C as successor:

duplicating the keys of said node B to said node C and notifying it that it should act as secondary key handler for the duplicated keys;
notifying said node A that it should act as incoming access handler for said node C for queries directed to keys in said node C while said node B is leaving the system.

This enables to maintain the full functionality of the system despite the node has left.

According to one embodiment said keys are accompanied with a value including the addresses of one or more nodes which should be contacted by a querying node instead of the node which has left.

This enables a location management to be performed by an embodiment of the invention.

BRIEF DESCRIPTION OF THE DRAWINGS

Fig. 1 shows a peer-to-peer system according to the prior art.

Fig. 2 shows a lookup mechanism in a peer-to-peer system according to the prior art.

Fig. 3A to 3D show a join mechanism in a peer-to-peer system according to the prior art.

Fig. 4A illustrates a lookup mechanism in a peer-to-peer system according to the prior art.

Fig. 4B illustrates a mobility churn handling mechanism in a peer-to-peer system according to an embodiment of the invention.

Fig. 5 illustrates a mobility churn handling mechanism in a peer-to-peer system according to a further embodiment of the invention.

Fig. 6 illustrates a mobility churn handling mechanism in a peer-to-peer system according to a further embodiment of the invention.

Fig. 7A and 7B illustrates a mobility churn handling mechanism in a peer-to-peer system according to a further embodiment of the invention.

DETAILED DESCRIPTION

The present invention will now be described in detail by exemplary embodiments.

According to one embodiment there is provided a method to make it (still) possible to identify a node that changes its addresses frequently or temporarily while staying connected to the system with one or more intermittent leaves from it. For that purpose according to an embodiment a node's identifier (e.g. an identifier under a readable naming scheme such as a URI, or a MAC address or any other unique identifier assigned to the node and not being subject to change) is explicitly separated from its IP address. In other words, such an identifier is treated as an additional identifier of a node, in addition to its IP address which may be subject to change. A node is assigned such an identifier. The position of the node in the structured peer-to-peer system is based on this identifier rather than on the IP address. This has the effect that in case of a change of the IP address not necessarily a new position in the peer-to-peer system has to be assumed by the node. Instead, the node may resume its function within the peer-to-peer system at the same location as before. The other nodes are informed about the new IP address of the node in order to enable them to contact the node and to direct queries to it. Once the notification about the new IP address has been completed the node may resume its function within the peer-to-peer system.

The suspend message may according to one embodiment have the effect that no query at all may be forwarded anymore using the finger table entry filled with the node which has left. According to another embodiment the suspend message has only the effect that any node which has already once contacted the node which now has left (or has changed its IP address) does not contact this node anymore directly using the IP address it has previously used. However, a query to this node may still be issued, and according to an embodiment to be described later such a query may then be responded by a different node acting auxiliarily on behalf of the node which has left.

It should be noted that the usage of a method according to the foregoing embodiment where a unique identifier is used to identify the position of the node within the peer-to-peer structure rather than the IP address can be used in connection with any structure or topology of a peer-to-peer network. Therefore, while in the following examples describing embodiments of the invention in somewhat more detail reference is often made to a ring like structure, other structures or topologies can be used in connection with embodiments of the invention as well.

According to one embodiment the routing of a query through the peer-to-peer structure is accelerated by use of a finger table mechanism. The provision of a unique naming identifier then further leads to define a finger table and a successor list that explicitly includes an IP address for each entry in addition to the unique naming identifier. When a node comes back to the system in a sufficiently short time after its non-voluntary departure, the node comes back to the same place in the peer-to-peer system (e.g. in one embodiment a ring like in case of a system like Chord) with the same predecessor and the same successor. Contrary to existing systems it is not necessary to relocate for the node within the system. Rather, the node is incorporated into the system again only by communicating its new IP address.

For that purpose according to one embodiment there is provided for each node its identifier $n\_id$ and its address $n\_address$ (e.g. the IP address). $n\_id$ is fixed and chosen e.g. by hashing the node's name (e.g. another name identifier under another more readable naming scheme or a MAC address) with SHA-1 as a base hash function. $n\_address$ can be changed. Regarding entries of the finger table, these entries should contain also IP address and unique identifier, and they may be denotes as follows:

$$finger[k]\_id := n\_id \text{ of the first node on the cycle that succeeds } (n + 2^{k-1}) \bmod 2^m, 1 \leq k \leq m.$$

$$finger[k]\_address := n\_address \text{ of the above node.}$$

$$finger[k] := < finger[k]\_id , finger[k]\_address >$$

Each node also has assigned its successor, or even a successor list of its successors, and this successor list may also be denoted in the same way.

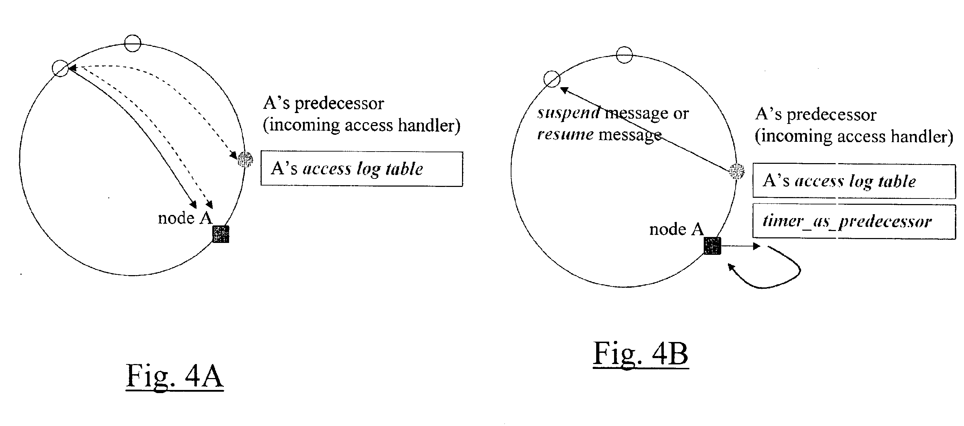

According to one embodiment the procedure for handling a node's leave is based on the following mechanism. Once a node is leaving the query operations regarding to this node are in some sense "interrupted" or "suspended" until it has rejoined the system and its new address has been distributed to the other nodes. This embodiment will now be explained in connection with Fig. 4. The embodiment illustrated in Fig. 4 relates to a ring like peer-to-peer structure which with respect to the topology is similar to the one described in Stoica et al. However, contrary to Stoica et al. there is provided a specific mechanism for the handling of mobility churn, as will be explained in the following.

Fig. 4A shows a basic query mechanism for a key stored at node A. Such a query is directed to A by at first finding A's predecessor using the finger tables of the nodes. Once the preceding node is found this node acts as an "incoming access handler" for its successor in the sense that it returns the ID of its successor to the node from which the query originated in order to inform this node that the query should be directed to the successor. Then the query is directed to the successor and it is answered by the successor by returning the IP address corresponding to the searched key.

Fig. 4B then shows how according to an embodiment a leave of node A is handled. The predecessor of A as the incoming access handler keeps track of the nodes which have accessed node A by maintaining an access log table. The access log table of node A which is maintained by A's predecessor is a list of nodes that have accessed the node A in a certain time. It may include nodes that point to the node A in their finger table as well as nodes that have issued queries to keys stored in the node A. Because A's predecessor is the node where all queries to node A converge, and further because any entry of node A in a finger table of another node also means that A's predecessor has been accessed by this node, A's predecessor is aware of all nodes which have access A and which have node A in their finger table. Each entry in the access log table consists of a node's identifier and its address (IP address).

When node A changes its address or leaves, according to one embodiment it notifies its predecessor and thereby triggers a timer which is set to a predetermined time timer_as_predecessor. As long as this timer has not run out (which may be referred to as "transition time") the predecessor of node A considers itself to still be the predecessor of A.

According to one embodiment the predecessor knows that A leaves e.g. from a stabilization procedure running on the network. From this procedure which verifies the imediate succcessor of A the predecessor may know that node A has left.

Furthermore A's predecessor notifies the nodes in the access log table maintained by it by sending a Suspend message to inform them that node A has left and is at the moment not reachable. This mechanism allows nodes in A's access log table to avoid unnecessary retransmission of queries or of user data, which is caused by routing to the node A during its transition. This mechanism is particularly helpful when the query frequency is high and A's transition time is long. A's predecessor, which keeps the A's access log table, sends a message to each node in the table to ask to suspend the finger table entry for the node A after the node A has left the system. (This message may be referred to as *suspend* message.) The suspension is resumed when the each node receives a *resume* message, the notification of the change of the address *A_address* of the node A which has left and came back with the new address.

If the node A has notified its predecessor about its new address, and if the timer set by timer_as_predecessor has not yet expired, the predecessor of A informs the nodes which correspond to entries in the access log table and which have received a suspend message about the new address of node A by sending a Resume message. Then these nodes know that node A has joined the peer-to-peer system again and can be reached again.

Therefore, there is distinguished between a "transition time" during which a node's leave may be temporary and a non-temporary leave of a node. During the "transition time" according to one embodiment the normal mechanisms are just "suspended" and then "resumed" when a transition phases is completed.

According to one embodiment node A's predecessor recognizes nodes that need to be listed in A's access log table by monitoring its own *find_successor(id)* procedure which has already been described hereinbefore and which also is described in Stoica et al. A's predecessor according to an embodiment keeps the table of an appropriate size so that it is not getting too big. As mentioned already, since the unique identifier *A_id* of the node does not change, the node A always comes back to the same place in the peer to-peer structure. And if the node A comes back to the system in a sufficiently short time after its non-voluntary departure so that there has been no further change with respect to the preceding node, A's predecessor also is the same node.

When node A comes back to the system in a sufficiently short time after its non-voluntary departure, node A asks its predecessor to notify the nodes in A's access log table of the change of *A_address* (the IP address of A). Naturally the predecessor of node itself thereby gets notified about the change of *A_address.* Then A's predecessor notifies further its predecessor of the change to be reflected in the successor list, and this goes on until an appropriate level. The term "appropriate level" here means that further predecessors are informed about A's new address until all predecessors where A appears in the successor list have updated the address of A in their successor list. The node A also notifies its successor of the change. The notification about the new address may be referred to as "resume message" since it triggers the resumption of the normal procedure with respect to rejoined node A.

Regarding the timeout already mentioned before, this mechanism allows A's predecessor to remain as it is and prevents it to become the predecessor of the A's successor. If the normal "stabilization procedures" which deal with the change in the network such as a node's leave are carried out in intervals which are small compared to or in the order of the transition time, the stabilization procedure of the network system may try to assign a new role to A's predecessor, namely the role of the predecessor of A's successor due to A's leave. In such a case the set timer prevents such a change in the role of A's predecessor and blocks a corresponding change in the network management structure. After the node A leaves the system, *A. predecessor.timer_as_predecessor* is set to a predetermined value. If the timer is expired, A's predecessor assumes that an ordinary node leave has happened and then A's predecessor may assume a new role as the predecessor of A's successor. However, until the timer is expired, the A's predecessor keeps considering the node A as its successor.

In the following there will be described a further embodiment which is directed to enhance the system robustness. This embodiment is based on properly duplicating important data like keys or routing information. This mechanism allows correct lookup even during the A's transition time and is realized by defining two successors ( a "normal" and a "secondary" successor) of a node and two key handlers (a " normal" and a "secondary" key handler) for a key.

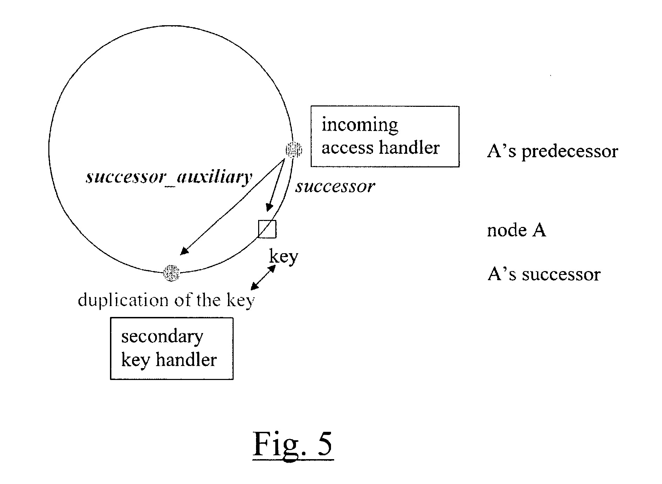

This embodiment will now be explained in connection with Fig. 5.

A's predecessor uses the *successor_auxiliary* (which is A's successor) as the successor when queries are routed in during the A's transition time. The keys of node A have been duplicated to A's successor so that it may act in response to queries on behalf of node A as a "secondary key handler". The successor of node A thereby becomes the successor_ auxiliary for A's predecessor.

However, according to one embodiment in this case the reply for the query returned by the secondary key handler includes a flag that shows that the *successor_auxiliary* is used.

When the *successor_auxiliary* is used, the access log table for A's successor is maintained in A's predecessor.

This access log table is transferred then to any node (e.g. node A when it returns) that comes later to join the peer-to-peer system between A's successor and A's predecessor.

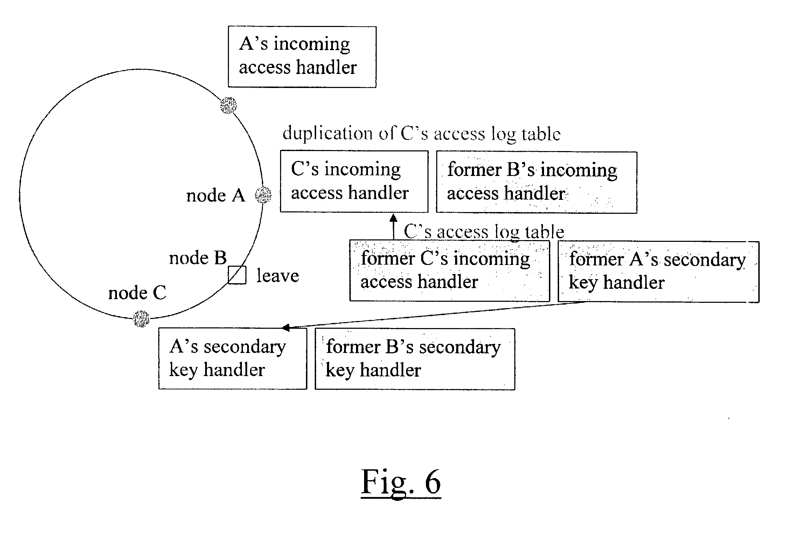

In the following there will now be explained a further embodiment in connection with Fig. 6 which explains in somewhat more detail the roles of the individual nodes, in particular the roles which A's predecessor and node A's successor have with respect to the node A in case of node B leaving the system. Node A's predecessor knows the nodes that have the node A in their finger tables or that have accessed keys stored in the node A. Node A's successor is responsible for keys that originally belong to the node A after the node A has completely left the system. These roles are illustrated in Fig. 6, which shows node A's predecessor as node A's incoming access handler and the (former) node B's successor as the node A's secondary key handler.

This embodiment allows an enhancement of the system robustness against sequential node leave and join by keeping the relationship of roles among a node, its predecessor, and its successor. Fig. 6 depicts the relationship. If the node B in this figure leaves the system, the access log table for the node C is lost. This access table needs to be protected in some way. Therefore the access table of B which is stored in node A is copied to A's predecessor beforehand.

Similarly, the access log table of the node A, which is stored in A's predecessor, is duplicated into the predecessor of the A's predecessor. Thereby the access log tables can be protected.

According to one embodiment during the node's transition time its task to answer queries is taken over by the succeeding node acting as secondary key handler. The node's predecessor maintaines a separate access log table which has as entries the accesses to the secondary key handler. Once the node which has left returns to the network, the separate access log table is synchronized with the access log table maintained by the node . Thereby care is taken to achieve consistency of the entries.

The aforementioned embodiments stabilize structured peer-to-peer lookup systems in unstable environments by hiding its mobility churn, and also improve correctness and performance of the lookup process in the systems.

In existing systems, keys stored by a node in mobility scenario are lost after the node's move until the key issuers issue the keys again. In the aforementioned embodiments these keys are retained in the system and in some embodiments can be accessed even during the node's transition time.

In existing systems, when nodes move in a mobility scenario, it causes stale entries in finger tables, leads to frequent time-outs in a lookup process, and lengthens lookup time. In the embodiments described hereinbefore, the stale finger table entries are suppressed and then updated. The number of time-outs is reduced.

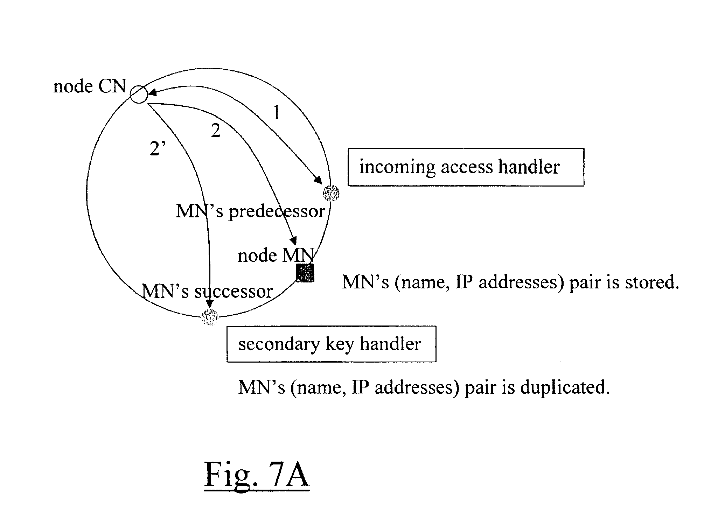

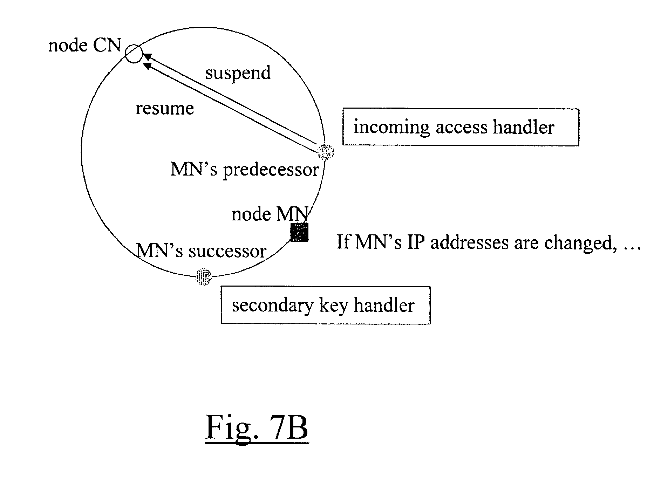

In the following there will be described in connection with Figures 7A and 7B a further embodiment which is directed to Location Management.

It may be assumed that node MN has in its key list an entry that consists of its name (identifier) as the key and several IP addresses as the value. These IP addresses might be e.g. for terminals that the users are using instead of node MN or for answering machines and they might be put in an order of preference. However, the actual IP address of node MN is not included in this list. This list with its entries is duplicated in MN's successor's key list. In the following it will now be explained how such a configuration can be used for location management, including a case if mobile node has disappeared or has left the network but instead an answering machine or any other node may be reached.

Assume now that a node CN sends a query with the key *MN_id,* in other words it searches for the name of the mobile node MN. The query is then routed through the network and it reaches in message 1 the predecessor of MN as its incoming key handler. MN's predecessor returns a message to the CN that says "this key is stored in the following node", in other words it refers the querying node to its successor. However, now one has to distinguish between two different cases which are indicated in Fig. 7A by the messages 2 and 2'.

Assume that node MN still belongs to the network on its location between its predecessor and its successor. Then MN's predecessor returns a message to the querying node which contains MN's IP address and its name, in other words it directly points to MN. The querying node then is informed about MN's address and may directly contact MN using the given address which was returned by MN's predecessor.

However, in case of MN having left the network a different handling takes place. The leaving of MN causes - in case CN has already once accessed MN and there exists a corresponding entry in the access log table - to send a suspend message from MN's predecessor to CN: This prevents CN from directly contacting MN via the address it has used during its previous access of MN.

This means that CN has to search again for MN as indicated in Fig. 7A, albeit with a somewhat different result. The query again arrives at MN's predecessor. However, since MN has left, MN's successor has become the "auxiliary_sucessor" and the "secondary key handler", and therefore the predecessor of MN returns the address and the name of MN's successor to the querying node. This is indicated by message 2' in Fig. 7A.

The querying node CN then accesses MN's secondary key handler which returns one or more of the addresses which have been stored in the entries which have been duplicated from MN to MN's successor. E.g. the first of this entry may be an entry the address of which corresponds to an answering machine, and the querying node may then connect to this address. If more than one address have been stored and returned to the querying node, the querying node may try them one after another according to their order to connect to the node(s) which MN has defined as the ones which a query should be routed to.

In both cases the address of MN *MN_address* is continuously updated after MN's move or return by the *resume* message sent by MN's predecessor as shown in Fig. 7B. This enables CN to again communicate with MN once it has rejoined the network.

According to the foregoing this embodiment enables location management functionality, in a distributed manner without any center node, including a case if mobile node has disappeared or has left the network but instead an answering machine or any other node may be reached.

In existing structured peer-to-peer systems, the entry that consists of the MN's name and several IP addresses is stored in a certain remote node, but which makes not much difference. However cache update needs to be additionally considered and the mobility scenario is not properly addressed.

The mobility scenario makes a difference. Mobility churn is hidden in the embodiments of the invention, but is apparent in existing systems. One could therefore say that the embodiments contribute to realize an overlay discrete-mobile network that is autonomously constructed without any assumption of existence of fixed stable node on top of any underlying networks. The existence of any mobility management functionalities in the underlying network may only help to stabilize the system because a node's move is not observed from an overlay network point of view.

The embodiments may also be applied by a network service provider for providing overlay network services.

User nodes connected to the provider's network, including both a cellular network and a WLAN network, or to the Internet can act as "affiliates" under an agreement to work as a peer node in a peer-to-peer lookup system. A provider may also have some manageable nodes that act as peer nodes in the system. The system may be regarded as an element for overlay network service provisioning that is based on underlying networks comprised of not only one provider's network but also other network operators' networks. In the system a certain provider may act as a DHT (Distributed Hash Table) Service Provider working together with distributed affiliates. Overlay network service provisioning allows a provider to extend its service coverage to areas where it does not have network infrastructure.

The aforementioned embodiments contribute to stabilize the system especially when policies of the underlying network operators do not allow nodes to have statically allocated IP addresses, which is often the case.

The skilled person will understand that while the foregoing embodiments have been explained in connection with ring-like peer-to-peer structures, embodiments of the invention may as well be used in connection with other topologies of peer-to-peer structures. The principle of using a unique identifier which does not change to locate a node within the network topology can be applied in connection with any network topology. Moreover, also the maintenance of an access log table, the mechanism of a secondary key handler to which keys are duplicated, or suspend and resume messages may also be used in connection with any other topology of a structured peer-to-peer network in which a node has a defined location.

It will be understood by the skilled person that the embodiments described hereinbefore may be implemented by hardware, by software, or by a combination of software and hardware. The modules described in connections with embodiments of the invention may be as a whole or in part implemented by microprocessors or computers which are suitably programmed such as to act in accordance with the methods explained in connection with embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

**Claims**

1. A method for handling mobility churn in a structured peer-to-peer system where a node may change its IP address, said method comprises:

   identifying each node in said peer-to-peer system by its IP address which may be subject to a change and further by a unique naming identifier which is not subject to any change;
   assigning to each node its location in the structured peer-to-peer system based on its unique naming identifier;
   if a node returns to said peer-to-peer system after having left temporarily, returning to its location within said structured peer-to-peer system and notifying members nodes of the peer-to-peer system about the new IP address of said node, said method being **characterized by** further comprising:

   informing other nodes of said peer-to-peer system to suspend to use finger table entries directed to said node until a notification about a change of the address of said node has been sent.

2.   The method of claim 1, further comprising:

      in case of a leave of a node from said structured peer-to-peer system due to a change of said IP address of a node, setting a timer for a predetermined time; and

      if said node returns within said predetermined time to said peer-to-peer system, returning to its location within said structured peer-to-peer system and notifying members nodes of the peer-to-peer system about the new address of said node.

3.   The method of one of claims 1 to 2, further comprising:

      maintaining an access log table which keeps track of the nodes which have accessed said node;

      in case of said node which has left said peer-to-peer system having returned to said system, informing the nodes in said access log table about the new address of said returned node.

4.   The method of one of claims 1 to 3, wherein said access log table comprises any nodes which have accessed said node which has left and any node which has said node which has left in its finger table.

5.   The method of one of the preceding claims, further comprising;

      duplicating the keys stored in the node to another node, and

      auxiliarily responding to queries directed to said keys by said node to which said keys have been duplicated.

6.   The method of one of the preceding claims, further comprising:

      in case of a node B having node A as predecessor and node C as successor:

            duplicating the keys of said node B to said node C and notifying it that it should act as secondary key handler for the duplicated keys;

            notifying said node A that it should act as incoming access handler for said node C for queries directed to keys in said node C while said node B is leaving the system.

7.   The method of one of claims 5 to 6, wherein
said keys are accompanied with a value including, the addresses of one or more nodes which should be contacted by a querying node instead of the node which has left.

8.   An apparatus for handling mobility churn in a structured peer-to-peer system where a node may change its IP address, said apparatus comprising:

      an identifying unit for identifying each node in said peer-to-peer system by its IP address which may be subject to a change and further by a unique naming identifier which is not subject to any change;

      an assigning unit for assigning to each node its location in the structured peer-to-peer system based on its unique naming identifier;

      a return unit for if a node returns to said peer-to-peer system after having left temporarily, enabling a return to its location within said structured peer-to-peer system and notifying members nodes of the peer-to-peer system node about the new IP address of said node, said apparatus being **characterized by** further comprising:

            a notifying unit for informing other nodes of said peer-to-peer system to suspend to use finger table entries directed to said node until a notification about a change of the address of said node has been sent.

9.   The apparatus of claim 8, further comprising:

      a timing unit for in case of a leave of a node from said structured peer-to-peer system due to a change of said IP address of said node, setting a timer for a predetermined time; and

      said return unit being adapted for if said node returns within said predetermined time to said peer-to-peer system, enabling a returning to its location within said structured peer-to-peer system and notifying members nodes of the peer-to-peer system about the new address of said node.

10.  The apparatus of one of claims 8 to 9, further comprising:

a maintaining unit for maintaining an access log table which keeps track of the nodes which have accessed said node;

a notifying unit for in case of said node which has left said peer-to-peer system having returned to said system, informing the nodes in said access log table about the new address of said returned node.

**11.** The apparatus of one of claims 8 to 10, wherein said access log table comprises any nodes which have accessed said node which has left and any node which has said node which has left in its finger table.

**12.** The apparatus of one of claims 8 to 11, further comprising;

a duplicating unit for duplication the keys stored in the node to another node which auxiliarily responds to queries directed to said keys.

**13.** The apparatus of one of claims 8 to 12, further comprising:

in case of a node B having node A as predecessor and node C as successor:

a duplicating unit for duplicating the keys of said node B to said node C and notifying it that it should act as secondary key handler for the duplicated keys;

a notifying unit for notifying said node A that it should act as incoming access handler for said node C for queries directed to keys in said node C while said node B is leaving the system.

**14.** The apparatus of one of claims 8 to 14, wherein

said keys are accompanied with a value including the addresses of one or more nodes which should be contacted by a querying node instead of the node which has left.

**15.** A computer program comprising computer executable code which when being executed on a computer enables said computer to carry out a method according to one of claims 1 to 7.


**Patentansprüche**

**1.** Verfahren zum Handhaben eines mobilitätsbedingten Wechsels *(Mobility Chum)* in einem strukturierten Peer-to-Peer-System, wo ein Knoten seine IP-Adresse ändern kann, wobei das Verfahren umfasst:

Identifizieren jedes Knotens in dem Peer-to-Peer-System anhand seiner IP-Adresse, die einer Änderung unterworfen werden kann, und ferner anhand eines eindeutigen Namensidentifizierers, der keiner Änderung unterworfen wird;

Zuweisen eines Ortes in dem strukturierten Peer-to-Peer-System zu jedem Knoten anhand seines eindeutigen Namensidentifizierers;

falls ein Knoten zu dem Peer-to-Peer-System zurückkehrt, nachdem er es vorübergehend verlassen hat, Zurückführen des Knotens zu seinem Ort in dem strukturierten Peer-to-Peer-System und Informieren von Mitgliederknoten des Peer-to-Peer-Systems über die neue IP-Adresse des Knotens, wobei das Verfahren **dadurch gekennzeichnet ist, dass** es ferner umfasst:

Informieren anderer Knoten des Peer-to-Peer-Systems, dass sie die Verwendung von Fingertabelleneinträgen, die auf diesen Knoten gerichtet sind, einstellen, bis eine Meldung über eine Änderung der Adresse des Knotens gesendet worden ist.

**2.** Verfahren nach Anspruch 1, das ferner umfasst:

im Fall eines Abgangs eines Knotens aus dem strukturierten Peer-to-Peer-System auf Grund einer Änderung einer IP-Adresse eines Knotens Setzen eines Zeitgebers auf eine vorgegebene Zeit; und

falls der Knoten innerhalb der vorgegebenen Zeit zu dem Peer-to-Peer-System zurückkehrt, Zurückführen des Knotens zu seinem Ort in dem strukturierten Peer-to-Peer-System und Informieren von Mitgliederknoten des Peer-to-Peer-Systems über die neue Adresse des Knotens.

**3.** Verfahren nach einem der Ansprüche 1 bis 2, das ferner umfasst:

Aufrechterhalten einer Zugriffsprotokoll-Tabelle, die die Spur der Knoten hält, die auf den Knoten zugegriffen haben;

falls der Knoten, der das Peer-to-Peer-System verlassen hat, zu dem System zurückgekehrt ist, Informieren der Knoten in der Zugriffsprotokoll-Tabelle über die neue Adresse des zurückgekehrten Knotens.

4. Verfahren nach einem der Ansprüche 1 bis 3, wobei die Zugriffsprotokoll-Tabelle irgendwelche Knoten enthält, die auf den Knoten, der gegangen ist, und auf irgendeinen Knoten, der diesen Knoten, der gegangen ist, in seiner Fingertabelle hat, zugegriffen haben.

5. Verfahren nach einem der vorhergehenden Ansprüche, das ferner umfasst.

Duplizieren der in dem Knoten gespeicherten Schlüssel für einen weiteren Knoten und

hilfsweise Antworten auf Anfragen, die zu den Schlüsseln durch jenen Knoten gerichtet werden, für den die Schlüssel dupliziert worden sind.

6. Verfahren nach einem der vorhergehenden Ansprüche, das ferner umfasst:

im Fall eines Knotens B, der einen Knoten A als Vorgänger und einen Knoten C als Nachfolger hat:

Duplizieren der Schlüssel des Knotens B für den Knoten C und ihm melden, dass er als eine Handhabungseinrichtung eines sekundären Schlüssels für die duplizierten Schlüssel wirken sollte;

Informieren des Knotens A, dass er als eine Handhabungseinrichtung für einen ankommenden Zugriff für den Knoten C für Abfragen, die zu den Schlüsseln in dem Knoten C gerichtet sind, wirken sollte, während der Knoten B das System verlässt.

7. Verfahren nach einem der Ansprüche 5 bis 6, wobei

die Schlüssel von einem Wert begleitet werden, der die Adressen eines oder mehrerer Knoten, die statt des Knotens, der gegangen ist, durch einen abfragenden Knoten kontaktiert werden sollten, enthält.

8. Vorrichtung zum Handhaben eines mobilitätsbedingten Wechsels in einem strukturierten Peer-to-Peer-System, wo ein Knoten seine IP-Adresse ändern kann, wobei die Vorrichtung umfasst:

eine Identifizierungseinheit zum Identifizieren jedes Knotens in dem Peer-to-Peer-System anhand seiner IP-Adresse, die einer Änderung unterworfen werden kann, und ferner anhand eines eindeutigen Namensidentifizierers, der keiner Änderung unterworfen wird;

eine Zuweisungseinheit zum Zuweisen eines Ortes zu jedem Knoten in dem strukturieren Peer-to-Peer-System anhand seines eindeutigen Namensidentifizierers;

eine Rückführungseinheit, um dann, wenn ein Knoten zu dem Peer-to-Peer-System zurückkehrt, nachdem er es vorübergehend verlassen hat, eine Rückführung zu seinem Ort in dem strukturierten Peer-to-Peer-System zu ermöglichen und um Mitgliederknoten des Peer-to-Peer-Systems über die neue IP-Adresse des Knotens zu informieren, wobei die Vorrichtung **dadurch gekennzeichnet ist, dass** sie ferner umfasst:

eine Meldeeinheit zum Informieren anderer Knoten des Peer-to-Peer-Systems, damit sie die Verwendung von Fingertabellen-Einträgen, die auf den Knoten gerichtet sind, einstellen, bis eine Meldung über eine Änderung der Adresse des Knotens gesendet worden ist.

9. Vorrichtung nach Anspruch 8, die ferner umfasst:

eine Zeitgebereinheit, um im Fall eines Abgangs eines Knotens aus dem strukturierten Peer-to-Peer-System auf Grund einer Änderung der IP-Adresse des Knotens einen Zeitgeber auf eine vorgegebene Zeit zu setzen; und wobei die Rückführungseinheit ausgelegt ist, um in dem Fall, dass der Knoten innerhalb der vorgegebenen Zeit zu dem Peer-to-Peer-System zurückkehrt, eine Rückführung zu seinem Ort in dem strukturierten Peer-to-Peer-System zu ermöglichen und um Mitgliederknoten des Peer-to-Peer-Systems über die neue Adresse des Knotens zu informieren.

10. Vorrichtung nach einem der Ansprüche 8 bis 9, die ferner umfasst:

eine Aufrechterhaltungseinheit zum Aufrechterhalten einer Zugriffsprotokoll-Tabelle, die die Spur der Knoten, die auf den Knoten zugegriffen haben, hält;

eine Meldeeinheit, um in dem Fall, in dem der Knoten, der das Peer-to-Peer-System verlassen hat, zu dem System zurückgekehrt ist, die Knoten in der Zugriffsprotokoll-Tabelle über die neue Adresse des zurückgekehrten Knotens zu informieren.

**11.** Vorrichtung nach einem der Ansprüche 8 bis 10, wobei die Zugriffsprotokoll-Tabelle irgendwelche Knoten enthält, die auf den Knoten, der gegangen ist, und auf irgendeinen Knoten, der den Knoten, der gegangen ist, in seiner Fingertabelle hat, zugegriffen haben.

**12.** Vorrichtung nach einem der Ansprüche 8 bis 11, die ferner umfasst:

eine Duplizierungseinheit zum Duplizieren der in dem Knoten gespeicherten Schlüssel für einen weiteren Knoten; der hilfsweise auf Anfragen, die an die Schlüsel gerichtet sind, antwortet.

**13.** Vorrichtung nach einem der Ansprüche 8 bis 12, die ferner umfasst:

im Fall eines Knotens B, der einen Knoten A als Vorgänger und einen Knoten C als Nachfolger hat:

eine Duplizierungseinheit zum Duplizieren der Schlüssel des Knotens B für den Knoten C und zum Informieren des Knotens C, dass er als eine Handhabungseinrichtung eines sekundären Schlüssels für die duplizierten Schlüssel wirken sollte;
eine Meldeeinheit zum Informieren des Knotens A, dass er als eine Handhabungseinrichtung für einen ankommenden Zugriff für den Knoten C für Abfragen, die an Schlüssel in dem Knoten C gerichtet sind, wirken sollte, während der Knoten B das System verlässt.

**14.** Vorrichtung nach einem der Ansprüche 8 bis 14, wobei
die Schlüssel von einem Wert begleitet werden, der die Adressen eines oder mehrerer Knoten, die statt des Knotens, der gegangen ist, durch einen abfragenden Knoten kontaktiert werden sollten, enthält.

**15.** Computerprogramm, das einen computerausführbaren Code enthält, der, wenn es auf einem Computer ausgeführt wird, den Computer in die Lage versetzt, ein Verfahren nach einem der Ansprüche 1 bis 7 auszuführen.


**Revendications**

**1.** Procédé de traitement des changements dus à la mobilité dans un système poste-à-poste structuré dans lequel un noeud peut modifier son adresse IP, ledit procédé comprenant les étapes suivantes :

identifier chaque noeud dans ledit système poste-à-poste par son adresse IP qui peut être soumise à un changement et en outre par un identifiant de nom unique qui n'est soumis à aucun changement ;
attribuer à chaque noeud son emplacement dans le système poste-à-poste structuré en se basant sur son identifiant de nom unique ;
si un noeud retourne dans ledit système poste-à-poste après l'avoir quitté temporairement, à retourner à son emplacement à l'intérieur dudit système poste-à-poste structuré et à indiquer aux noeuds membres du système poste-à-poste la nouvelle adresse IP dudit noeud, ledit procédé étant **caractérisé en ce qu'**il comprend en outre l'étape suivante:

indiquer aux autres noeuds dudit système poste-à-poste de suspendre l'utilisation d'entrées de table de routage concernant ledit noeud jusqu'à ce qu'une notification concernant un changement de l'adresse dudit noeud ait été envoyée.

**2.** Procédé selon la revendication 1, comprenant en outre :

dans le cas où un noeud quitte ledit système poste-à-poste structuré en raison d'un changement de ladite adresse IP d'un noeud, à régler un temporisateur sur une période prédéterminée ; et
si ledit noeud retourne pendant ladite période prédéterminée dans ledit système poste-à-poste, retourner à son emplacement à l'intérieur dudit système poste-à-poste structuré et à indiquer aux noeuds membres du système poste-à-poste la nouvelle adresse dudit noeud.

**3.** Procédé selon l'une des revendications 1 à 2, comprenant en outre les étapes suivantes :

conserver une table du journal d'accès qui garde une trace des noeuds qui ont accédé au dit noeud ;
dans le cas où ledit noeud qui a quitté ledit système poste-à-poste est retourné au dit système, à indiquer aux noeuds dans ladite table du journal d'accès la nouvelle adresse dudit noeud retourné.

**4.** Procédé selon l'une des revendications 1 à 3, dans lequel ladite table du journal d'accès comprend n'importe quel noeud qui a accédé au dit noeud qui a quitté le système et n'importe quel noeud qui dispose dudit noeud qui a quitté le système dans sa table de routage.

**5.** Procédé selon l'une des revendications précédentes, comprenant en outre les étapes suivantes :

dupliquer les clés stockées dans le noeud sur un autre noeud, et
répondre accessoirement aux interrogations concernant lesdites clés par ledit noeud sur lequel lesdites clés ont été dupliquées.

**6.** Procédé selon l'une des revendications précédentes, comprenant en outre les étapes suivantes :

dans le cas où un noeud B a un noeud A comme prédécesseur et un noeud C comme successeur :

dupliquer les clés dudit noeud B sur ledit noeud C et lui indiquer qu'il doit agir comme un gestionnaire de clé secondaire pour les clés dupliquées ;
indiquer au dit noeud A qu'il doit agir comme un gestionnaire d'accès entrant pour ledit noeud C pour les interrogations concernant les clés dans ledit noeud C alors que ledit noeud B quitte le système.

**7.** Procédé selon l'une des revendications 5 à 6, dans lequel
lesdites clés sont accompagnées d'une valeur comprenant, les adresses d'un ou de plusieurs noeuds qui doivent être contactés par un noeud d'interrogation au lieu du noeud qui a quitté le système.

**8.** Dispositif de traitement des changements dus à la mobilité dans un système poste-à-poste structuré dans lequel un noeud peut modifier son adresse IP, ledit dispositif comprenant:
une unité d'identification destinée à identifier chaque noeud dans ledit système poste-à-poste par son adresse IP qui peut être soumise à un changement et en_ outre par un identifiant de nom unique qui n'est soumis à aucun changement ;
une unité d'attribution destinée à attribuer à chaque noeud son emplacement dans le système poste-à-poste structuré en se basant sur son identifiant de nom unique ;
une unité de retour destinée, au cas où un noeud retourne dans ledit système poste-à-poste après l'avoir quitté temporairement, à permettre un retour à son emplacement à l'intérieur dudit système poste-à-poste structuré et à indiquer aux noeuds membres du noeud du système poste-à-poste la nouvelle adresse IP dudit noeud, ledit dispositif étant **caractérisé en ce qu'**il comprend en outre :

une unité de notification destinée à indiquer aux autres noeuds dudit système poste-à-poste de suspendre l'utilisation d'entrées de table de routage concernant ledit noeud jusqu'à ce qu'une notification concernant un changement de l'adresse dudit noeud ait été envoyée.

**9.** Dispositif selon la revendication 8, comprenant en outre :

une unité de temporisation destinée, dans le cas où un noeud quitte ledit système poste-à-poste structuré en raison d'un changement de ladite adresse IP dudit noeud, à régler un temporisateur sur une période prédéterminée ; et
ladite unité de retour étant conçue, si ledit noeud retourne pendant ladite période prédéterminée dans ledit système poste-à-poste, pour permettre un retour à son emplacement à l'intérieur dudit système poste-à-poste structuré et pour indiquer aux noeuds membres du système poste-à-poste la nouvelle adresse dudit noeud.

**10.** Dispositif selon l'une des revendications 8 à 9, comprenant en outre :

une unité de conservation destinée à conserver une table du journal d'accès qui garde une trace des noeuds qui ont accédé au dit noeud ;

une unité de notification destinée, dans le cas où ledit noeud qui a quitté ledit système poste-à-poste est retourné au dit système, à indiquer aux noeuds dans ladite table du journal d'accès la nouvelle adresse dudit noeud retourné.

11. Dispositif selon l'une des revendications 8 à 10, dans lequel ladite table du journal d'accès comprend n'importe quel noeud qui a accédé au dit noeud qui a quitté le système et n'importe quel noeud qui dispose dudit noeud qui a quitté le système dans sa table de routage.

12. Dispositif selon l'une des revendications 8 à 11, comprenant en outre ;
une unité de duplication destinée à dupliquer les clés stockées dans le noeud sur un autre noeud qui répond accessoirement aux interrogations concernant lesdites clés.

13. Dispositif selon l'une des revendications 8 à 12, comprenant en outre :

dans le cas où un noeud B a un noeud A comme prédécesseur et un noeud C comme successeur :

une unité de duplication destinée à dupliquer les clés dudit noeud B sur ledit noeud C et à lui indiquer qu'il doit agir comme un gestionnaire de clé secondaire pour les clés dupliquées ;
une unité de notification destinée à indiquer au dit noeud A qu'il doit agir comme un gestionnaire d'accès entrant pour ledit noeud C pour les interrogations concernant les clés dans ledit noeud C alors que ledit noeud B quitte le système.

14. Dispositif selon l'une des revendications 8 à 13, dans lequel
lesdites clés sont accompagnées d'une valeur comprenant les adresses d'un ou plusieurs noeuds qui doivent être contactés par un noeud d'interrogation au lieu du noeud qui a quitté le système.

15. Programme informatique comprenant un code exécutable par un ordinateur qui lorsqu'il est exécuté dans un ordinateur permet au dit ordinateur de réaliser un procédé selon l'une des revendications 1 à 7.

N = hash (ip address)

K = hash (object name)

e.g. N51 is a node with a node id 51

lookup(54)

N8

N14

N21

N1

N32

N38

N42

N48

N51

N56

K54

Fig. 2

Finger table

| N8 + 1 | N14 |
| N8 + 2 | N14 |
| N8 + 4 | N14 |
| N8 + 8 | N21 |
| N8 +16 | N32 |
| N8 +32 | N42 |

skip list
e.g. N8+2 | N14 | ip address of N14

N8

+1
+2
+4
+8
+16
+32

N14

N21

N1

N32

N38

N42

N48

N51

N51 is responsible for K49, K50, and K51.

Fig. 1

Fig. 3

A's predecessor
(incoming access handler)

A's *access log table*

node A

**Fig. 4A**

*suspend* message or
*resume* message

A's predecessor
(incoming access handler)

A's *access log table*

*timer_as_predecessor*

node A

**Fig. 4B**

EP 1 802 070 B1

*successor_auxiliary*

incoming
access handler

A's predecessor

*successor*

node A

key

A's successor

duplication of the key

secondary
key handler

# Fig. 5

EP 1 802 070 B1

A's incoming
access handler

duplication of C's access log table

C's incoming
access handler

former B's incoming
access handler

node A

C's access log table

node B

leave

former C's incoming
access handler

former A's secondary
key handler

node C

A's secondary
key handler

former B's secondary
key handler

# Fig. 6

node CN

1

2

2'

incoming access handler

MN's predecessor

node MN

MN's (name, IP addresses) pair is stored.

MN's successor

secondary key handler

MN's (name, IP addresses) pair is duplicated.

<u>Fig. 7A</u>

node CN

suspend

resume

incoming access handler

MN's predecessor

node MN

MN's successor

If MN's IP addresses are changed, ...

secondary key handler

## Fig. 7B

## REFERENCES CITED IN THE DESCRIPTION

**Patent documents cited in the description**

• US 20040064693 A

**Non-patent literature cited in the description**

• **STOICA, I. ; MORRIS, R. ; LIBEN-NOWELL, D. ; KARGER, D. R. ; KAASHOEK, M. F. ; DABEK, F. ; BALAKRISHNAN, H.** Chord: A Scalable Peer-to-Peer Lookup Service for Internet Applications. IEEE/ACM TRANSACTIONS NETWORKING, 01 February 2003, vol. 11

• **LIBEN-NOWELL, D. ; BALAKRISHNAN, H. ; KARGER, D.** Analysis of the Evolution of Peer-to-Peer Systems. Proc. ACM PODC, July 2002

• **RHEA, S. ; GEELS, D. ; ROSCOE, T. ; KUBIATO-WICZ.** J. Handling Churn in a DHT. *Proc. USENIX,* 04 June 2004

• **HSIAO, H. C. ; KING, C. T.** Mobility Churn in DHTs. *Proc. IEEE ICDCSW,* 05 June 2005

• **Y.C. HU ; S.M. DAS ; H. PUCHA.** ANETs HANDBOOK ON THEORETICAL AND ALGORITHMIC ASPECTS OF SENSOR, AD HOC WIRELESS. *Peer-to-Peer Overlay Abstractions,* August 2005, 857-874